Europäisches Patentamt

European Patent Office

Office européen des brevets

(19)

(11) Numéro de publication : **0 185 579**
**B1**

(12) **FASCICULE DE BREVET EUROPÉEN**

(45) Date de publication du fascicule du brevet :
**02.11.89**

(51) Int. Cl.⁴ : **G 11 B 5/55**, G 11 B 5/54,
G 05 B 19/415// G11B21/08

(21) Numéro de dépôt : **85402324.9**

(22) Date de dépôt : **27.11.85**

(54) **Procédé pour déplacer un système mobile mu par un moteur électrique suivant une trajectoire donnée.**

(30) Priorité : 29.11.84 FR 8418157

(43) Date de publication de la demande :
**25.06.86 Bulletin 86/26**

(45) Mention de la délivrance du brevet :
**02.11.89 Bulletin 89/44**

(84) Etats contractants désignés :
**DE FR GB IT NL SE**

(56) Documents cités :
EP--A-- 0 069 546
CH--A-- 402 120
FR--A-- 1 491 735
FR--A-- 2 172 733
US--A-- 3 932 796
IBM TECHNICAL DISCLOSURE BULLETIN, vol. 26, no. 3A, août 1983, pages 1244-1247, New York, US; M.J. STEEN et al.: "Two-speed cam"
IBM TECHNICAL DISCLOSURE BULLETIN, vol. 26, no. 1, juin 1983, pages 376-377, New York, US; W.P. QUINLAN et al.: "Bidirectional dual-velocity accessing for a disk drive"
IBM TECHNICAL DISCLOSURE BULLETIN, vol. 22, no. 6, novembre 1979, pages 2501-2504, New York, US; M.H. BOSIER: "Door opening mechanism for magnetic disk cartridge"

(73) Titulaire : **BULL S.A.**
**121, Avenue de Malakoff**
**F-75116 Paris (FR)**

(72) Inventeur : **Carteau, Daniel**
**16 rue des Myosotis**
**F-78180 Limours (FR)**
Inventeur : **Couette, Jean-Jacques**
**13 rue Louis Antoine Bougainville**
**F-78180 Montigny Le Bretoneux (FR)**
Inventeur : **Maury, Christian**
**10 rue Farman**
**78190 Voisin Le Bretonneux (FR)**
Inventeur : **Pham, Dan**
**1 Square Edmond Barbanson**
**F-92220 Bagneux (FR)**

(74) Mandataire : **Gouesmel, Daniel et al**
**BULL S.A. Industrial Property Department 25 avenue de la Grande-Armée GA-4X018**
**F-75016 Paris (FR)**

EP 0 185 579 B1

# EP 0 185 579 B1

## Description

L'invention concerne un procédé pour déplacer un système mobile mu par un moteur électrique suivant une trajectoire donnée et son dispositif de mise en œuvre. Elle est plus particulièrement applicable aux systèmes de déplacement et de chargement de têtes comportant les transducteurs de lecture écriture des disques magnétiques d'une mémoire à disques.

On sait que, dans les mémoires à disques magnétiques, les informations sont écrites (ou lues) sur des pistes concentriques circulaires par des transducteurs de lecture/écriture qui sont disposés à très faible distance de chacune des faces des disques et qui peuvent se déplacer au-dessus de celles-ci de manière à écrire (ou lire) l'ensemble des pistes contenues sur chacune des faces. Lors de ces opérations d'écriture et de lecture, les disques ont une vitesse de rotation constante.

A chaque face d'un disque magnétique, est associé, le plus souvent un seul transducteur d'écriture/ lecture. Pour que ce transducteur puisse écrire ou lire n'importe quelle information contenue sur la face qui lui est associée, il est disposé sur une plate-forme qui est déplacée parallèlement à la face du disque au moyen d'un moteur électrodynamique linéaire ou rotatif.

La plate-forme elle-même se compose de deux parties essentielles, à savoir d'une part, une partie appelée tête qui comprend les transducteurs et d'autre part un dispositif de suspension dont une extrémité est solidaire de la tête et l'autre extrémité solidaire d'un bras rigide solidaire de la partie mobile du moteur électrodynamique.

Généralement, la tête comportant le(s) transducteur(s) de lecture/écriture d'une face d'un disque a la forme d'un parallélépipède rectangle relativement plat dont la face inférieure disposée en regard du disque comporte le transducteur. La grande face supérieure parallèle à la précédente contient les extrémités des fils électriques d'entrée et/ou sortie du transducteur et les moyens permettant de connecter ces fils aux circuits électroniques de lecture et/ou écriture de la mémoire à disques.

Une plate-forme de ce genre est décrite dans le brevet français N° 2 426 943 déposée le 26 mai 1978 sous le titre « Plate-forme d'au moins un transducteur de lecture et/ou d'enregistrement d'un support d'informations ».

La rotation du disque provoque l'existence entre la face inférieure de la tête de la plate-forme et la face du disque associée au transducteur de celle-ci, d'un coussin d'air comprimé qui empêche la tête de toucher le disque et par suite de le détériorer. On dit alors que la tête vole au-dessus de la face du disque qui lui est associée. Dans ces conditions, la distance entre la face du disque et la face inférieure de la tête est appelée « hauteur de vol » h. Il est à noter que la tête est également appelée patin de vol dans la pratique courante.

L'équilibre dynamique de la plate-forme en vol est obtenu en opposant à la force de pression créée par le coussin d'air sur la surface de la face inférieure de la plate-forme une force dite « charge » dirigée en sens inverse, appliquée sur la face supérieure de la tête et de module égal à celui de la force de pression.

La charge est relativement faible, de l'ordre de 10 à 15 grammes. Elle est fournie par une lame de charge solidaire du bras amovible rigide.

Un problème délicat à résoudre est celui de la mise en vol de la tête. En effet, lorsque la mémoire à disques ne fonctionne pas, la tête se trouve dans une position située au voisinage de la périphérie du disque à l'extérieur de celui-ci, appelée « position de repos » pour laquelle la distance H entre la face inférieure de la tête et le plan contenant la face du disque associée à la tête, est de l'ordre de quelques dixièmes de millimètres. Pour permettre la mise en vol de la tête, il convient donc de la déplacer depuis sa position de repos à l'extérieur du disque jusqu'à la position où elle est abaissée vers le disque en position de vol stable, à une hauteur h de quelques dixièmes de microns au-dessus de la surface du disque.

La mise en vol est délicate en raison principalement des turbulences de l'air au voisinage de la surface du disque.

En d'autres termes, mettre en vol la tête consiste à déplacer celle-ci d'une position où sa distance par rapport au disque est H, jusqu'à une position où on effectue son chargement de telle sorte qu'elle vole de façon stable au-dessus de la surface du disque, sa distance par rapport à ce dernier étant alors h inférieure à H.

Dans la pratique courante, on utilise de plus en plus fréquemment des systèmes de déplacement et de chargement de têtes comprenant un positionneur rotatif (bras rotatif), solidaire de la partie mobile d'un moteur électrodynamique rotatif et un dispositif de chargement/déchargement des têtes permettant soit d'abaisser la tête vers le disque en position de vol, soit de remonter la tête de sa position de vol à sa position de repos. Un tel système est par exemple décrit dans la demande de brevet française N° 82.04349 déposée le 15 mars 1982 par la Compagnie Internationale pour l'Informatique CII Honeywell Bull sous le titre « Dispositif de chargement de corps principal de plate-forme comportant au moins un transducteur de lecture/écriture d'un support d'informations ».

Dans un tel système de déplacement et de chargement de têtes, le positionneur est monté sur roulements à billes. La charge de chaque tête est fournie, ainsi qu'il a été mentionné plus haut, par une lame de charge s'articulant par l'une de ses extrémités à un bras solidaire du positionneur rotatif et portant à son autre extrémité un dispositif de suspension de la tête. Cette lame est elle-même reliée mécaniquement à un fil sur lequel s'appuie un poussoir monté à l'extrémité d'une lame-ressort articulée

2

sur le bras solidaire du positionneur. Le poussoir est en contact avec le profil d'une came fixe. Dans un mode de réalisation préféré, le profil de cette came comprend deux points de rupture de pente le divisant ainsi en trois parties distinctes.

Le déplacement et le chargement d'une tête s'effectue en trois phases successives, chaque phase correspondant à une position du poussoir sur l'une des trois parties du profil de la came. Ces trois phases sont les suivantes :

Phase 1. Lorsque le poussoir est en contact avec la première partie du profil de la came, le positionneur rotatif d'abord immobilisé est ensuite libéré. Cette phase est dite phase de déverrouillage.

Phase 2. Le positionneur ayant été déverrouillé, le poussoir est alors en contact avec la partie centrale du profil de la came. Lorsque le poussoir se déplace le long de cette partie centrale, le positionneur rotatif effectue une rotation qui amène la tête d'une position située à l'extérieur du disque à une position située au-dessus du disque, à la périphérie de celui-ci, la hauteur de la tête par rapport au plan du disque étant toujours égale à H ;

Phase 3. Durant cette phase, le poussoir se déplace le long de la troisième partie du profil de la came. L'effort de traction exercée par le poussoir sur la lame de charge diminue progressivement de telle sorte que celle-ci s'abaisse progressivement vers le disque. Elle entraîne de ce fait la tête vers ce dernier, de manière à ce que, lorsque le poussoir arrive en fin de course sur cette troisième partie, la tête se trouve en position de vol stable au-dessus du disque à la hauteur de vol h. Dès que la tête a atteint sa position de vol stable au-dessus du disque, on dit que la tête est chargée. Dans ces conditions, le poussoir n'est plus en contact avec le profil de la came. Cette troisième phase qui est celle de la mise en position de vol stable de la tête au-dessus du disque est donc celle du chargement de la tête proprement dit.

Il est clair que, réciproquement, c'est-à-dire pour décharger la tête et la ramener à sa position de repos, les opérations se déroulent exactement d'une manière inverse à celles des opérations de chargement. La première phase correspondant à la phase de chargement lors de la mise en vol s'appelant alors « phase de déchargement ».

Au vu de ce qui précède, on voit que l'on peut assimiler le système de déplacement et de chargement de tête à un système mobile qui se déplace le long d'une trajectoire donnée constituée par les trois parties du profil de la came. Pour simplifier le raisonnement, on assimilera, par la suite, le système mobile constitué par le système de déplacement et de chargement de têtes, à un mobile constitué par le poussoir se déplaçant le long du profil de la came et ayant même masse et même inertie que le système de déplacement et de chargement de têtes.

Pour une même mémoire à disques, en passant d'un parcours de la trajectoire effectué par le mobile à un autre, on constate que les efforts résistants provoqués par les forces de frottement qui s'opposent au mouvement du mobile le long du profil de la came peuvent varier, dans une proportion de 50 % : ainsi, ces forces de frottement peuvent varier de 10 à 15 grammes d'un parcours à l'autre pour une même machine. Des constatations analogues peuvent être faites pour des mémoires à disques différentes. Ces variations sont dues essentiellement aux variations des conditions d'environnement : température, hygrométrie, taux d'électricité statique dans l'air etc.

Pour ce qui est du déplacement du mobile le long du profil de la came, il y a lieu de résoudre les principaux problèmes suivants, dus essentiellement à ces variations :

1. Lors de la phase de déverrouillage du mobile, c'est-à-dire lorsqu'il doit quitter la première partie du profil de la came pour passer sur la seconde partie, en franchissant le premier point de rupture de pente, il convient de vérifier que ce premier point a été effectivement franchi. En effet, en raison des variations possibles de forces de frottement d'un parcours effectué par le mobile à un autre, la probabilité existe que, dans les mêmes conditions de fonctionnement du moteur électrodynamique (même courant et même tension d'alimentation) le premier point de rupture de pente soit franchi lors d'un parcours et ne le soit pas dans l'autre (dans ce dernier cas, il convient de modifier les conditions de fonctionnement du moteur).

2. Lorsque le mobile se déplace sur la seconde partie du profil, il convient que le mobile passe au second point de rupture de pente avec une vitesse comprise entre deux valeurs prédéterminées. En effet, si la vitesse du mobile est inférieure à une première valeur prédéterminée, le risque existe d'un retour en arrière du mobile. D'autre part, si la vitesse du mobile au second point de rupture de pente est supérieure à une seconde valeur prédéterminée plus grande que la première, le risque existe que l'énergie du mobile soit telle que, lors du chargement de la tête, la vitesse de celle-ci soit trop grande. Dans ces conditions, la probabilité existe que la tête vienne heurter le disque provoquant alors un endommagement aussi bien du disque que de la tête elle-même.

3. Dans la troisième partie, au moment du chargement de la tête le mobile doit avoir une vitesse comprise entre deux valeurs déterminées (par exemple entre 8 et 16 mm par seconde). En effet, si la vitesse est trop grande, le risque existe que la tête vienne percuter le disque et si la vitesse est trop faible, le mobile est animé d'un mouvement d'oscillation pouvant, lui aussi, entraîner le choc de la tête sur le disque.

Dans cette troisième partie, on doit donc déplacer le mobile en contrôlant sa vitesse alors que celui-ci, à partir du franchissement du second point de rupture de pente est soumis brusquement à une force motrice due à la réaction de la came sur le poussoir tendant à provoquer une accélération brutale de celui-ci. ·

La présente invention concerne un premier procédé pour déplacer le système mobile constitué par le système de déplacement et de chargement de têtes le long de la seconde partie du profil de la came entre les deux points de rupture de pente, de telle façon que le mobile franchisse le second point de rupture de pente avec une vitesse comprise entre deux valeurs prédéterminées, les forces de frottement auxquelles est soumis le mobile étant constantes pour un même parcours, mais pouvant varier d'un parcours à l'autre et d'une mémoire à disque à l'autre.

Le procédé consistant à déplacer le mobile le long de la troisième partie de telle façon que lors de l'atterrissage de la tête, ce dernier ait une vitesse comprise entre deux valeurs prédéterminées, est décrit et revendiqué dans la demande de brevet européen EP-A-184500 bénéficient de la même date de priorité, déposée par la compagnie demanderesse.

Au vu de ce qui précède, on voit que durant le parcours de la seconde partie du profil de la came, entre les deux points de rupture de pente, le mobile est soumis d'une part à la force d'entraînement que le moteur électrodynamique rotatif externe sur le mobile, et d'autre part aux forces de frottement.

Selon l'invention, le procédé pour déplacer un système mobile mu par un moteur électrodynamique suivant une trajectoire donnée vers un point de destination donné de celle-ci, en étant soumis à des efforts résistants constants pendant la durée d'un même déplacement mais pouvant varier sensiblement d'un parcours de la trajectoire à l'autre, le parcours comprenant une première partie et une seconde partie, la durée de la seconde partie étant très inférieure à la durée de la première particulièrement moins de 5 % de la durée totale du parcours, le système mobile passant au point intermédiaire avec une vitesse comprise entre une valeur minimum et une valeur maximum et étant soumis en ce point à une force motrice provoquant une accélération subite de celui-ci, est tel qu'on effectue les opérations suivantes :

a) On incrémente le courant d'un premier sens dans le moteur par pas successifs d'une durée de validation déterminée par envoi dans ce dernier d'une succession d'impulsions de courant, en vérifiant pendant la durée de validation de chaque impulsion si le mobile passe au point intermédiaire par détection d'une accélération du mobile surpassant un seuil déterminé, en envoyant à la fin de cette durée une nouvelle impulsion de courant supérieure à la précédente si le mobile n'est pas parvenu au point intermédiaire à cet instant, la valeur de la durée de validation et de l'incrément de courant étant respectivement fonction de la longueur du parcours et de la valeur minimum d'une part, de la valeur maximum d'autre part.

b) On envoie une impulsion de courant d'un sens inverse dans le moteur, lorsque le mobile est parvenu au point intermédiaire permettant à celui-ci d'opposer un couple résistant à ladite force motrice, la valeur de l'impulsion de freinage étant calculée de manière à permettre l'immobilisation du système mobile.

L'invention concerne également un dispositif pour déplacer un système de déplacement et de chargement d'au moins une tête comportant au moins un transducteur de lecture-écriture d'un disque magnétique, le long d'une came à deux points de ruptures de pente suivant une trajectoire donnée, le système étant mu par un moteur électrodynamique partant d'un point A où il est verrouillé, étant soumis à des efforts résistants constants pendant la durée du déplacement mais pouvant varier sensiblement d'un déplacement à l'autre et passant au second point de rupture avec une vitesse comprise entre une valeur minimum et une valeur maximum... le dispositif comprenant, dans le but d'amener le système au point d'arrivée où les têtes sont abaissées vers le disque en position de vol au-dessus de celui-ci, les moyens suivants :

a) Des moyens pour déverrouiller le système en envoyant un courant d'un premier sens et d'intensité croissante dans le moteur jusqu'à ce qu'on détecte son passage au premier point de rupture de pente de la came.

b) Des moyens pour incrémenter la vitesse du système mobile par incrémentation du courant dans le moteur par pas successifs d'une durée de validation prédéterminée, par envoi dans ce dernier d'une suite d'impulsions de courant de même sens, en vérifiant pendant la durée de validation de chaque impulsion si le système passe au second point de rupture de pente, en envoyant à la fin de cette durée une nouvelle impulsion de courant supérieure à celle de la précédente si le système n'est pas parvenu en ce point à cet instant, la valeur de la durée de validation et de l'incrément de courant étant respectivement fonction de la longueur du parcours et de la vitesse minimum d'une part et de la valeur maximum d'autre part, au second point de rupture.

c) Des moyens pour donner au système, lorsque l'on a détecté son passage par mesure de l'accélération du système au second point de rupture de pente (point B) où il est alors soumis à une force motrice dont l'intensité décroît en fonction de la distance du système par rapport à ce second point de rupture de pente, une vitesse de référence déterminée par envoi d'un courant de sens inverse dans le moteur permettant à celui-ci d'opposer un effort résistant à ladite force motrice, de manière à permettre l'immobilisation du système mobile.

d) Des moyens pour contrôler la vitesse du système mobile par envoi dans le moteur d'un courant décroissant.

D'autres caractéristiques et avantages de la présente invention apparaîtront à la lecture de la description suivante, donnés à titre d'exemple, purement illustratifs et nullement limitatifs, en référence aux dessins annexés sur lesquels :

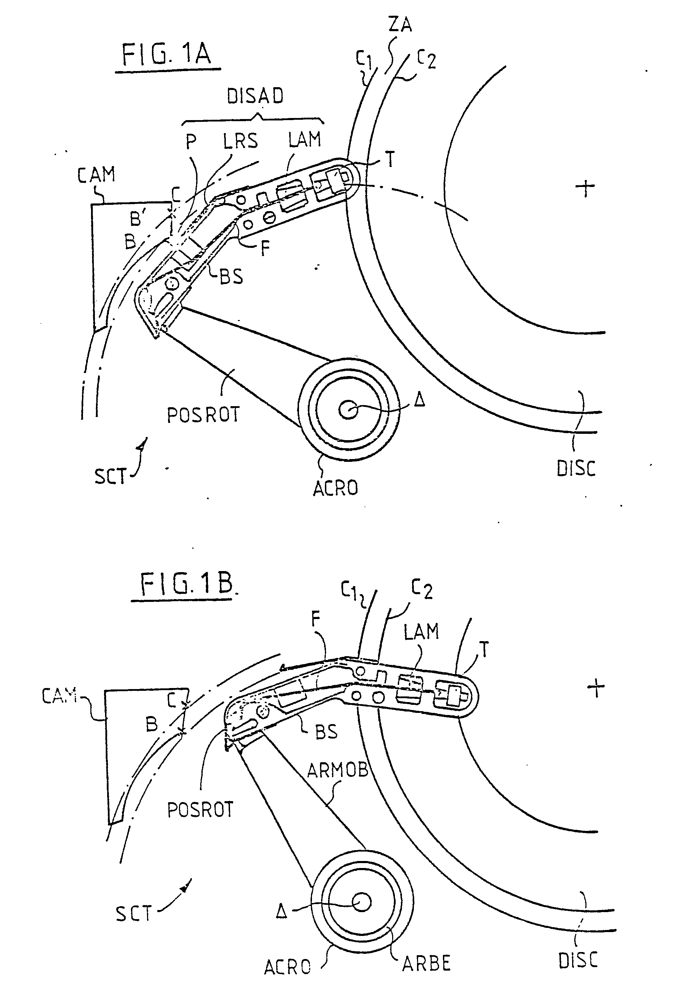

la figure 1 : composée des figures 1A et 1B, montre la disposition relative du moteur électrodynamique linéaire, du système de déplacement et de chargement de têtes de la came, et du disque, dans les deux cas suivants :

lorsque la tête n'est pas chargée (n'est pas en position de vol) au-dessus du disque (figure 1A),

lorsque la tête est chargée (en position de vol au-dessus du disque) (figure 1B).

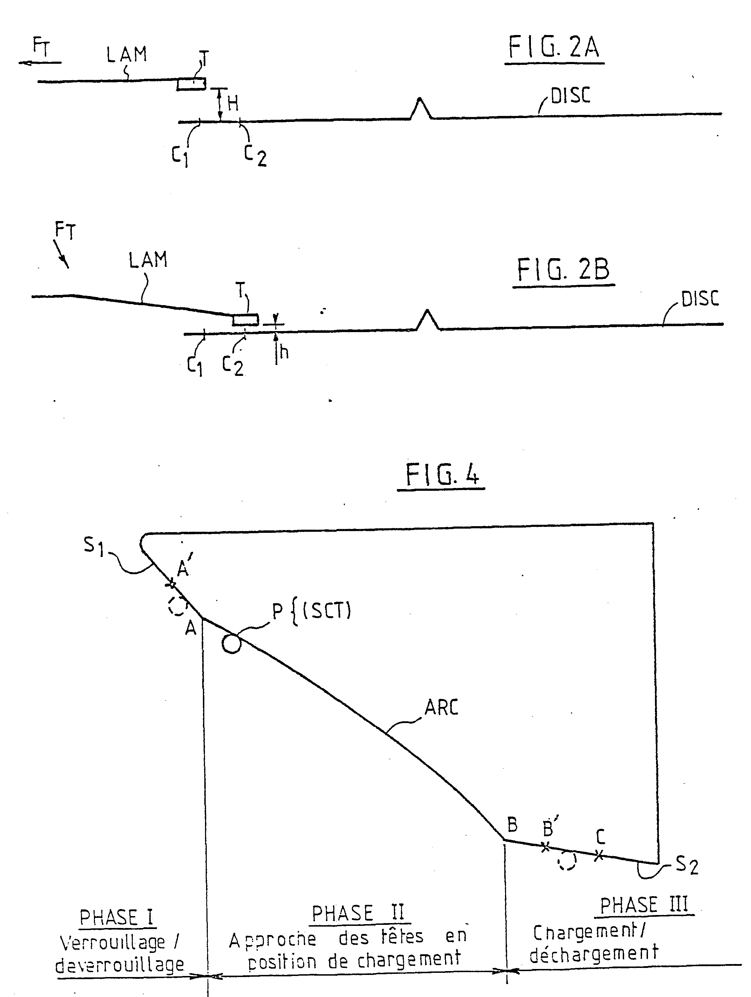

la figure 2 : composée des figures 2A et 2B est une vue de profil simplifiée montrant la position relative de la tête et du disque :

lorsque la tête n'est pas chargée (figure 2A) ;

lorsque la tête est chargée (figure 2B).

la figure 3 : est une vue de profil en perspective montrant le détail d'une partie du système de déplacement et de chargement de tête ;

la figure 4 : est une vue détaillée de la came montrant son profil en trois parties avec deux points de rupture de pente ;

la figure 5 : composée des figures 5A, 5B et 5C montre, l'évolution du courant I dans le moteur électrodynamique rotatif, lors du déplacement du système de déplacement et de chargement le long de la came ;

la figure 5A : montrant l'évolution du courant dans le moteur lors du déverrouillage du système de déplacement et de chargement ;

la figure 5B : montrant l'évolution du courant dans le moteur lorsque le système de déplacement et de chargement (le mobile) se déplace le long de la came entre les deux points de rupture de pente, selon le procédé selon l'invention ;

la figure 5C : montre l'évolution du courant dans le moteur, à partir du moment où le système de déplacement et de chargement a franchi le second point de rupture de pente ;

la figure 6 : montre comment est établie expérimentalement la durée du courant de freinage dans le moteur, à partir du moment où le système de déplacement et de chargement a franchi le second point de rupture de pente ;

la figure 7 : est un schéma fonctionnel du dispositif de mise en œuvre du procédé pour déplacer un système de déplacement et de chargement de têtes selon l'invention ;

la figure 8 : montre l'algorithme de fonctionnement du dispositif montré à la figure 7.

Afin de mieux comprendre le procédé selon l'invention, il est utile de rappeler comment est constitué un système de déplacement et de chargement de tête et comment il fonctionne.

On considérera, pour ce faire, les figures 1, 2, 3, 4.

Le système de déplacement et de chargement de tête SCT comprend, ainsi qu'on peut le voir sur ces mêmes figures,

un positionneur rotatif POSROT solidaire mécaniquement de l'arbre d'entraînement ARBC d'un moteur électrodynamique rotatif ACRO,

un dispositif de chargement et de déplacement de la tête T, à savoir DISAD,

la came fixe CAM.

L'actionneur rotatif ACRO a un axe de rotation $\Delta$.

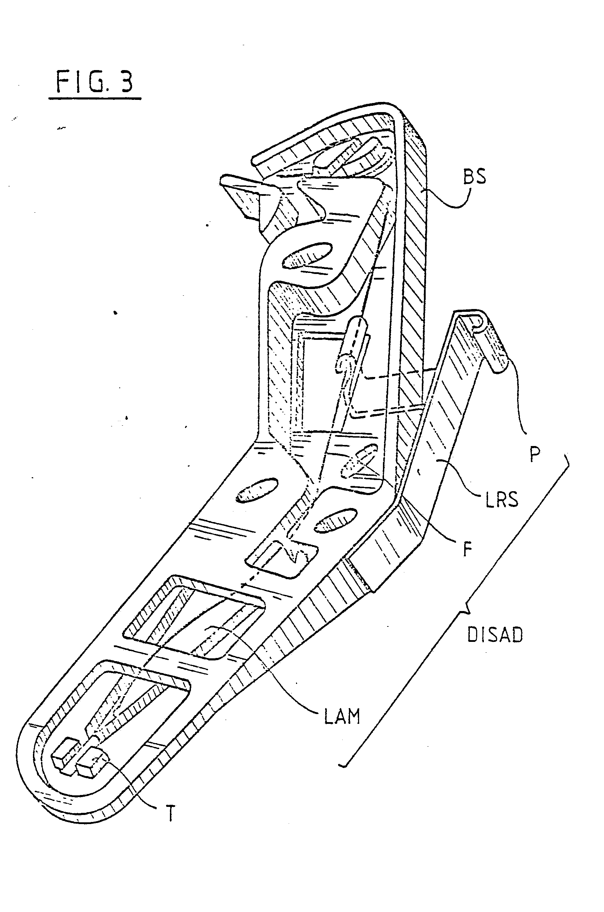

Le positionneur rotatif POSROT comprend d'une part une armature métallique ARMOB réalisée en un métal léger, et d'autre part le bras support BS (qu'on voit plus en détail représenté en perspective à la figure 3) qui porte le dispositif DISAD.

Le dispositif DISAD comprend :

la lame de charge LAM de la tête T à laquelle est lié mécaniquement un dispositif de suspension de la tête T, non visible à la figure 3,

la fil F en contact avec la lame ressort LRS. Cette dernière est munie en son extrémité d'un poussoir P et elle est fixée sur le bras support BS.

Le dispositif DISAD est commandé par une came fixa CAM avec laquelle il est en contact par l'intermédiaire du poussoir P.

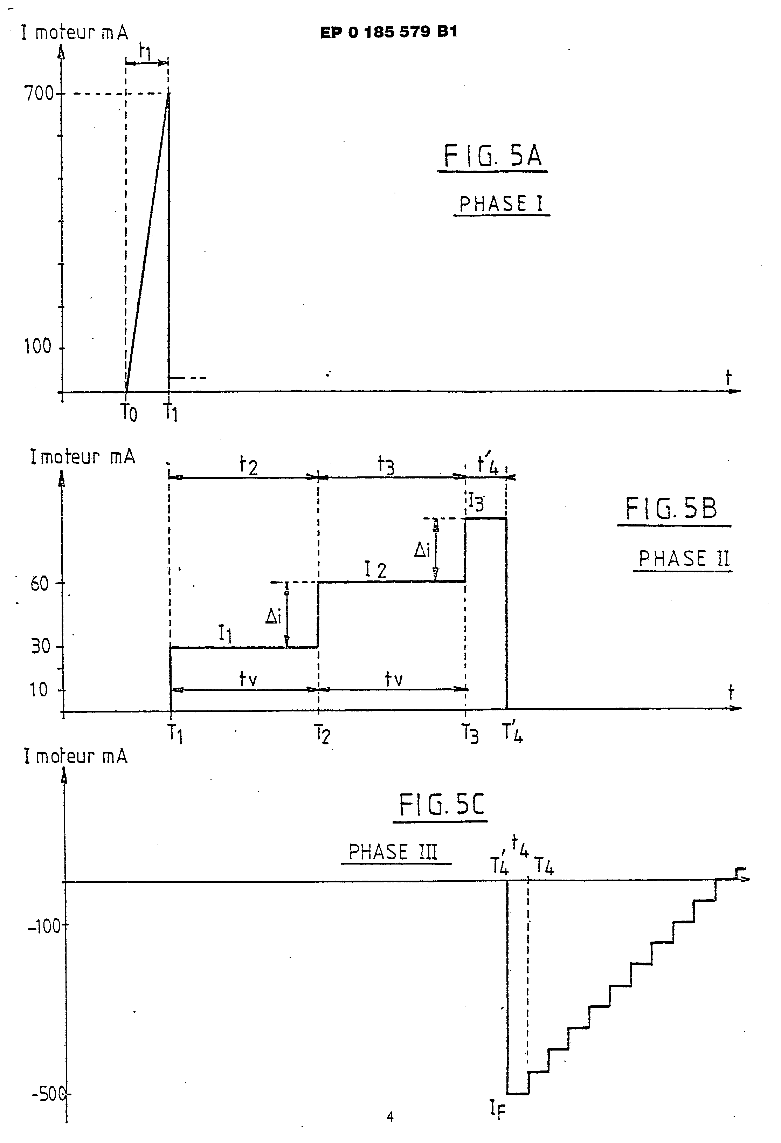

La came CAM présente un profil qu'on voit plus en détail à la figure 4. Ce profil comprend trois parties, à savoir deux segments de droite $S_1$ et $S_2$ séparés par un arc de cercle AB centré sur l'axe de rotation ($\Delta$) de l'actionneur rotatif. Le segment de droite $S_1$ est séparé de l'arc de cercle AB par un premier point de rupture de pente A alors que l'arc de cercle AB et le second segment de droite $S_2$ sont séparés par un second point de rupture de pente B.

Dans la pratique, le poussoir P qui est en contact avec le profil de la came, ainsi qu'il est représenté à la figure 4, se déplace le long de celle-ci entre les points A' et C.

Ainsi donc, lors d'une opération de déplacement et de chargement de la tête T par le système SCT, le

5

poussoir P se déplacera successivement sur les parties de profil A'A, AB et BC.

Il est clair qu'à l'inverse, lors d'une opération de déchargement et de déplacement des têtes, le poussoir se déplacera successivement sur les portions de profil CB, BA, AA'.

Ainsi qu'il a été écrit plus haut, les opérations de déplacement et de chargement de la tête T sur le disque DISC (voir figures 1 et 2) s'effectuent, selon trois phases successives :

### 1. Phase 1 : Déverrouillage :

Initialement, le poussoir étant en position A', le système SCT est immobilisé (verrouillé). Pour permettre le chargement de la tête T, on déverrouille le système de SCT en envoyant un courant dans le moteur électrodynamique rotatif ACRO. Le poussoir P se déplace alors sur le segment $S_1$ entre les points A' et A. Lors de cette phase la tête T est disposée à l'extérieur du disque DISC, à une hauteur H au-dessus du plan du disque DISC. Dès que le poussoir P a atteint le premier point de rupture de pente A, commence la seconde phase décrite ci-après.

### 2. Phase 2 : Approche des têtes en position de chargement.

Dans cette phase le poussoir P se déplace du premier point de rupture de pente A au second point de rupture de pente B en empruntant la deuxième partie du profil de la came CAM, à savoir l'arc de cercle AB. Durant cette phase, la tête T, est amenée de la position qu'elle occupait à l'extérieur du disque durant la phase de verrouillage à une position située au-dessus du disque, en regard du cercle $C_1$ (voir figures 1A, 1B et 2) situé à la périphérie du disque DISC. Durant cette phase d'approche des têtes, la tête T se déplace parallèlement au plan du disque DISC, c'est-à-dire qu'elle reste à une distance H du plan du disque. Aussi bien durant la phase 1 que durant la phase 2, la position du poussoir P est telle que la lame ressort LRS exerce une poussée sur le fil F lequel à son tour exerce un effort de traction $F_T$ (voir figure 2A) sur la lame de chargement LAM qui maintient ainsi la tête T à une hauteur H du plan du disque DISC. Dès que le poussoir P a franchi le second point de rupture de pente B on aborde la phase 3.

### 3. Phase 3 : Chargement proprement dit.

Le poussoir se déplace du second point de rupture B au point C sur le second segment de droite $S_2$. La lame ressort LRS s'éloigne du bord du bras support BS, de telle sorte que le fil F relache son effort de traction $F_T$ sur la lame de charge LAM, ce qui provoque l'abaissement de celle-ci vers le disque DISC. Cela provoque le chargement de la tête T sur le disque DISC, la distance entre la face inférieure de la tête T et le disque DISC étant alors égale à h, hauteur de vol de l'ordre de quelques dixièmes de microns (figure 2B), le poussoir P ayant quitté la surface $S_2$ de la came. La tête est alors en regard du cercle $C_2$ (figures 1A, 1B).

Ainsi qu'il a été dit plus haut, on admettra, que le système SCT est un système mobile se déplaçant suivant une trajectoire A'ABC. Ce système mobile est soumis, lors du parcours de la trajectoire A'ABC, à des efforts résistants qui, ainsi qu'il a été dit plus haut, restent constants pour un même parcours de la trajectoire A'ABC et peuvent varier d'un parcours de la trajectoire à l'autre (que ce soit pour une même mémoire à disques ou pour des mémoires différentes).

Il en résulte par exemple, qu'en déplaçant le système SCT au moyen d'un courant de commande dans le moteur électrodynamique rotatif ayant une intensité et une durée données, assurant à ce système des conditions de déplacement correctes, (à savoir déplacement dans le minimum de temps, chargement de la tête T avec une vitesse comprise entre deux valeurs prédéterminées données lui permettant de se placer à l'altitude de vol requise sans toucher le disque), dans des conditions d'environnement données, il se peut que le même courant de commande, dans d'autres conditions d'environnement, ne permette pas un déplacement correct des têtes. Par exemple, il se peut alors que le temps de déplacement soit trop court, les têtes risquant de venir percuter le disque, ou bien encore il se peut que le système de déplacement ne parvienne pas à franchir le second point de rupture de pente B, et alors la tête T ne peut être chargée.

Le premier objet de l'invention concerne un premier procédé pour déplacer un système mobile solidaire d'un moteur électrique suivant une trajectoire donnée (AB) remédiant aux inconvénients ci-dessus en déplaçant le mobile selon la phase 2 du mouvement dans les meilleures conditions (temps minimum, assurance que le point d'arrivée est atteint avec une vitesse comprise entre deux valeurs prédéterminées), et ce quelles que soient les conditions d'environnement.

Le deuxième objet de l'invention concerne également un second procédé pour déplacer un système de déplacement et de chargement de têtes solidaire d'un moteur électrique suivant une trajectoire donnée A'ABC (à deux points de rupture de pente) remédiant aux inconvénients mentionnés ci-dessus, en déplaçant le système suivant l'ensemble des trois phases 1, 2, 3 mentionnées ci-dessus.

On comprend mieux chacun des premier et second procédés selon l'invention, en se référant à la description plus détaillée que ci-dessus des trois phases du déplacement et de chargement de la tête T.

A. Phase 1 : (illustrée par la figure 5A) : On envoie dans l'induit du moteur électrodynamique rotatif un courant sous forme de rampe, dont l'intensité croît linéairement en fonction du temps. Durant cette phase on vérifie en permanence si le système mobile constitué par le système SCT passe au point A. Un mode de détection préféré du passage du système mobile au point A sera décrit plus loin. Ce mode de détection est identique au mode de détection du passage du système mobile au point B. La rampe de courant débute à l'instant $T_0$ et se termine à l'instant $T_1$ où l'on a détecté le passage du système mobile au point A. L'intervalle de temps $T_1 - T_0$ est par exemple de l'ordre de 25 à 30 millisecondes, alors qu'entre les instants $T_0$ et $T_1$, l'intensité de courant varie linéairement de 0 à quelques centaines de milliampères (700 milliampères à la figure 5A). A l'instant $T_1$, on passe à la seconde phase correspondant à la mise en œuvre du procédé selon l'invention.

B. Phase 2 : (illustrée par la figure 5B) : A l'instant $T_1$ on envoie une impulsion de courant $I_1$ (par exemple d'intensité égale à 30 milliampères). Cette impulsion a une durée maximale appelée temps de validation $t_v$, qui, dans l'exemple de réalisation indiqué, est de l'ordre de deux secondes. Pendant l'application de cette impulsion $I_1$, on vérifie si le mobile passe au point B. Si cela est le cas, on passe immédiatement à la phase 3. Si le mobile n'est pas passé au point B à la fin du temps de validation $t_v$, c'est-à-dire à l'instant $T_2$ avec $(T_2 - T_1) = t_v$, on envoie une seconde impulsion de courant $I_2$. Si $i_2$ est l'intensité de l'impulsion $I_2$ et $i_1$ l'intensité de l'impulsion $I_1$, les intensités $i_1$ et $i_2$ sont choisies par exemple, de telle façon que $i_2 - i_1 = i_1 = \Delta i$. $\Delta i$ est appelé incrément de courant. Pendant l'application de l'impulsion de courant $I_2$ dans l'induit du moteur ACRO, on vérifie si le mobile passe au point B (le mode de détection du passage au point B sera exposé plus loin). Si le mobile est parvenu au point B, on passe immédiatement à la phase 3 alors que, si le mobile n'est pas passé au point B à l'instant $T_3$, tel que $T_3 - T_2 = t_v$, on applique une troisième impulsion de courant $I_3$ d'intensité $i_3$, telle que par exemple :

$$(i_3 - i_2) = \Delta i$$

On vérifie à nouveau, pendant la durée de l'impulsion $I_3$ si le mobile passe au point B. On suppose que le mobile parvient au point B à l'instant $T'_4$ avec $(T'_4 - T_3) < t_v$. Le temps $t_v$ est calculé de la manière suivante :

on sait que le mobile doit parvenir au point B avec une vitesse comprise entre deux valeurs $V_1$ et $V_2$, où $V_1 < V_2$. Si L est la longueur de l'arc ARC, le temps de validation $t_v$ est tel que :

$$t_v = \simeq L/V1$$

Il est clair que les valeurs de $V_1$ et $V_2$ sont déterminées expérimentalement.

La valeur de $\Delta i$ est établie expérimentalement et dépend de la vitesse maximum $V_2$. (Si $\Delta i$ est trop important, la vitesse du système mobile risque de dépasser $V_2$ au point de rupture de pente B).

On voit que, durant la phase 2, où est mis en œuvre le procédé selon l'invention, on applique à l'induit du moteur une succession d'impulsions d'intensité croissante et de même durée et on vérifie durant l'application de chaque impulsion si le mobile passe au point de destination B. En d'autres termes, on peut dire que durant cette phase 2, on incrémente le courant par pas successifs d'une durée de validation $t_v$, ce qui revient à dire qu'on incrémente la vitesse du système mobile par pas successifs d'une même durée de validation $t_v$. A la figure 5B, les impulsions de courant ont été arbitrairement supposées positives.

Dès que le mobile est parvenu au point B, on passe ensuite à la phase 3.

C. Phase 3 : (illustrée par la figure 5C) : On sait que durant cette phase, le système mobile est soumis, à partir du second point de rupture de pente B, à une force motrice provoquée par la réaction de la came sur le poussoir, force motrice qui provoque une brusque accélération du système mobile au point B. Cette force mobile décroît en fonction de la distance du système mobile par rapport au point B. Cette brusque accélération peut, suivant les conditions d'environnement, donner à la vitesse de la tête T une valeur excessive telle que celle-ci vienne percuter le disque. C'est la raison pour laquelle il est nécessaire de contrôler le mouvement du système mobile pendant cette phase 3. Pour ce faire, il est nécessaire de donner d'abord au système mobile une vitesse de référence de départ parfaitement connue. En effet, du fait que :

1. au passage au point B, la vitesse du système SCT est comprise entre les deux valeurs $V_1$ et $V_2$.

2. immédiatement après avoir passé le point B, le système mobile subit une brusque accélération, la vitesse du mobile y est alors absolument quelconque et difficile à déterminer. On comprend donc que, dans ces conditions, tout contrôle du mouvement du système serait aléatoire.

C'est pourquoi, on choisit de donner à celui-ci une vitesse de référence de départ, qui, de préférence, est choisie nulle.

Pour ce faire, on envoie à l'instant $T'_4$ une impulsion de courant dans l'induit du moteur, de sens opposé aux impulsions $I_1$, $I_2$, $I_3$, c'est-à-dire négative dans l'exemple de réalisation choisi, dont l'intensité et la durée sont choisies de telle façon que le système mobile est immobilisé à l'instant $T_4$ tel que $T_4 - T'_4 = t_4$. Ce temps $t_4$ est de l'ordre de quelques dizaines de millisecondes. Soit $I_F$ cette impulsion de freinage.

Son intensité a été calculée de telle sorte qu'elle permette l'immobilisation du système mobile, lorsque ce dernier a une accélération maximale au point B due à la réaction de la came sur le poussoir. Cette accélération maximale est déterminée expérimentalement.

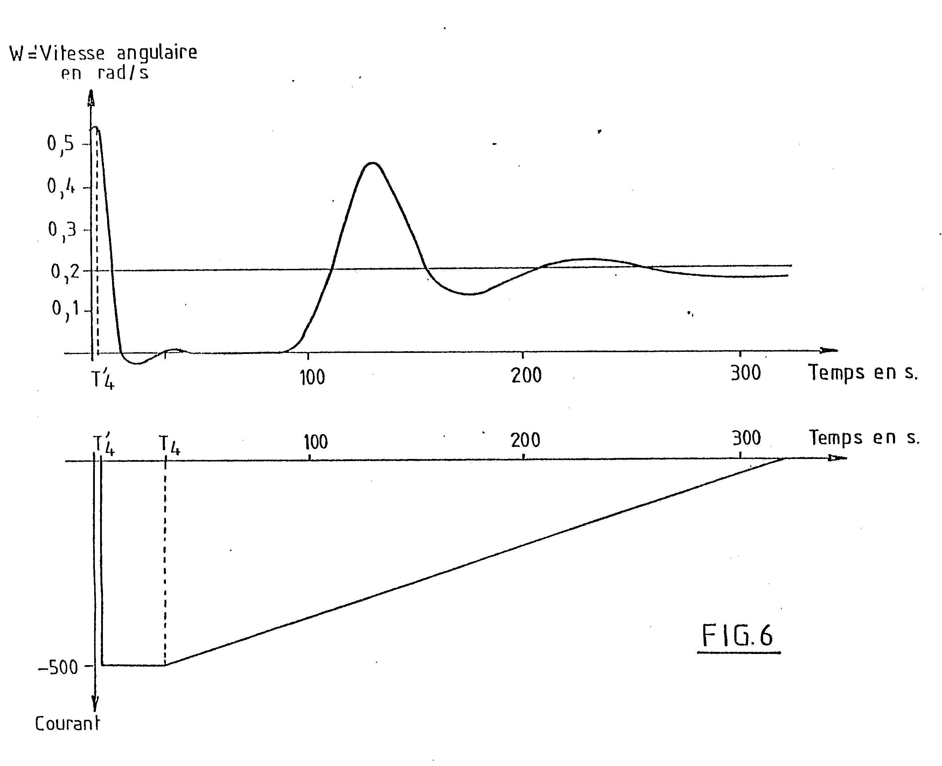

La durée $t_4$ a été choisie de telle sorte que, l'accélération au point B étant supposée maximum (c'est-à-dire la force motrice due à la réaction de la came sur le poussoir étant supposée maximum), l'intensité étant choisie égale à celle déterminée précédemment (par exemple de l'ordre de 500 milliampères), le système SCT est immobilisé sans oscillations résiduelles. On peut donc dire que la durée $t_4$ correspond à la durée du régime transitoire pendant lequel la vitesse angulaire $\omega$ du système de chargement de la tête T passe de la valeur qu'elle avait juste avant l'application de l'impulsion de freinage, à une valeur nulle (voir figure 6). Lorsque le système mobile est immobilisé, il est en équilibre sous l'action d'une part de la force motrice due à la réaction de la came sur le poussoir, et d'autre part du couple résistant exercé par le moteur et des forces de frottement.

A l'instant $T_4$, on applique à l'induit du moteur un courant décroissant linéairement en fonction du temps de la manière indiquée par exemple aux figures 5C et 6, la durée de cette rampe de courant décroissant étant de l'ordre de 200 à 300 millisecondes. L'obtention de cette rampe peut se faire, par exemple, sous forme d'une succession d'une dizaine de paliers, la durée de chaque palier étant de l'ordre de 20 millisecondes. L'allure de la vitesse angulaire est alors celle indiquée à la figure 6. Au bout d'un certain temps la vitesse se stabilise et reste sensiblement constante jusqu'à ce que le mobile parvienne au point C. Après le dernier palier où le courant est nul dans l'induit du moteur, on envoie une impulsion de courant positive de faible durée de telle façon que le système de déplacement et de chargement de tête atteigne une position prédéterminée, point limite de sa trajectoire au-delà de laquelle il ne peut se déplacer (par construction).

Pour détecter le passage du système mobile aussi bien au point A, qu'au point B, on mesure la variation d'accélération du système mobile. Ceci est obtenu en mesurant puis en différenciant la force contre-électromotrice du moteur électrodynamique linéaire. En effet, on sait que la force contre électromotrice du moteur électrodynamique linéaire e est de la forme e = —kV, où V est la vitesse linéaire du système mobile et k une constante. Si l'on différencie la force contre-électromotrice e on obtient :

$$de/dt = -kdV/dt = -k\gamma$$

où $\gamma$ est l'accélération linéaire du système mobile.

Pour détecter le passage aux points A et B, il suffit donc :

a) de mesurer la tension aux bornes de l'induit du moteur électrodynamique, égale à la force contre-électromotrice du moteur,

b) de différencier la tension mesurée,

c) de la comparer avec une valeur de seuil déterminée.

La valeur de seuil est déterminée expérimentalement, de telle façon qu'elle soit sensiblement plus grande que l'accélération moyenne calculée aussi bien sur le parcours A'A (pour détecter le passage au point A) que sur le parcours AB (pour détecter le passage au point B).

Les variations d'accélération aux points A et B étant à priori différentes, les valeurs des seuils pour détecter le passage du système mobile aux points A et B sont généralement différentes.

En d'autres termes, il y a deux seuils généralement différents : un pour le parcours A'A, l'autre pour le parcours AB. On voit que, en repérant le passage du système mobile aux points A et B par détection de l'accélération du système en mesurant la force contre électromotrice aux bornes du moteur puis en la différenciant, on s'affranchit d'un système de détection utilisant des capteurs extérieurs au système mobile, par exemple des capteurs opto-électroniques associés à leur dispositif d'amplification.

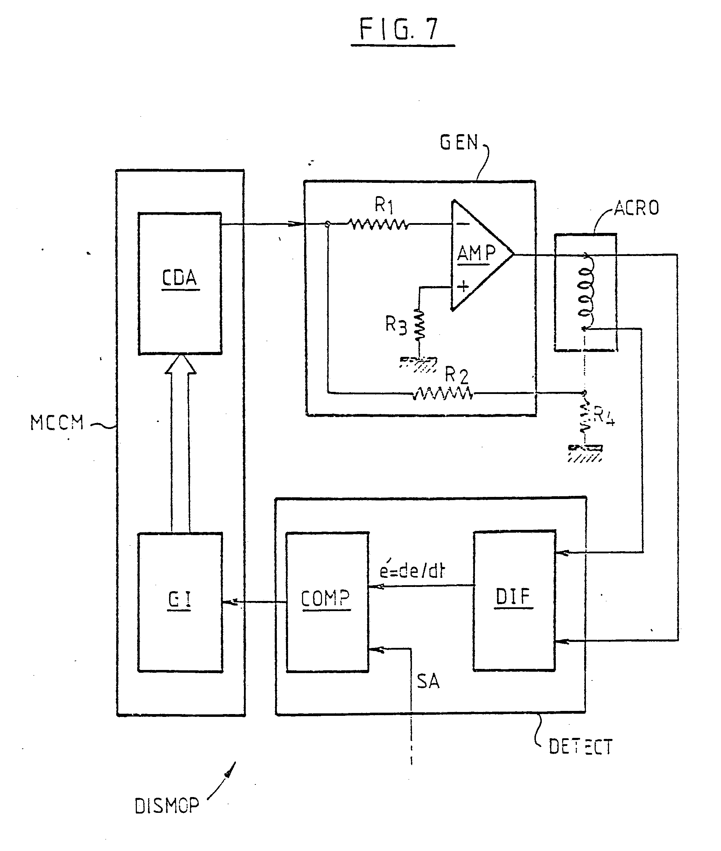

Un exemple de dispositf de mise en œuvre du second procédé pour déplacer le système de déplacement et de chargement SCT selon les phases 1, 2 et 3 selon l'invention est montré à la figure 7.

Ce dispositif DISMOP comprend :

le générateur de courant alimentant l'induit du moteur ACRO, à savoir le générateur GEN,

des moyens de commande du générateur de courant GEN, à savoir les moyens MCOM,

les moyens DETECT de détection du passage du système mobile aux points B et A.

Le générateur GEN comprend l'amplificateur AMP et les trois résistances $R_1$, $R_2$, $R_3$.

La résistance $R_3$ relie l'entrée positive de l'amplificateur à la masse, alors que la résistance $R_1$ relie la sortie des moyens de commande MCOM à l'entrée négative de l'amplificateur AMP, la résistance $R_2$ reliant l'entrée du générateur GEN à une des bornes de l'induit du moteur ACRO, cette même borne étant connectée par l'intermédiaire d'une résistance $R_4$ à la masse. La sortie de AMP est située à l'autre borne de l'induit de ACRO.

Ce générateur GEN transforme les impulsions de tension qu'il reçoit des moyens de commande MCOM en impulsions de courant telles que celles qui sont représentées aux figures 5A, 5B et 5C.

Les moyens de commande MCOM comprennent, un générateur d'instructions GI délivrant des instructions sous forme binaire à un convertisseur digital analogique CDA.

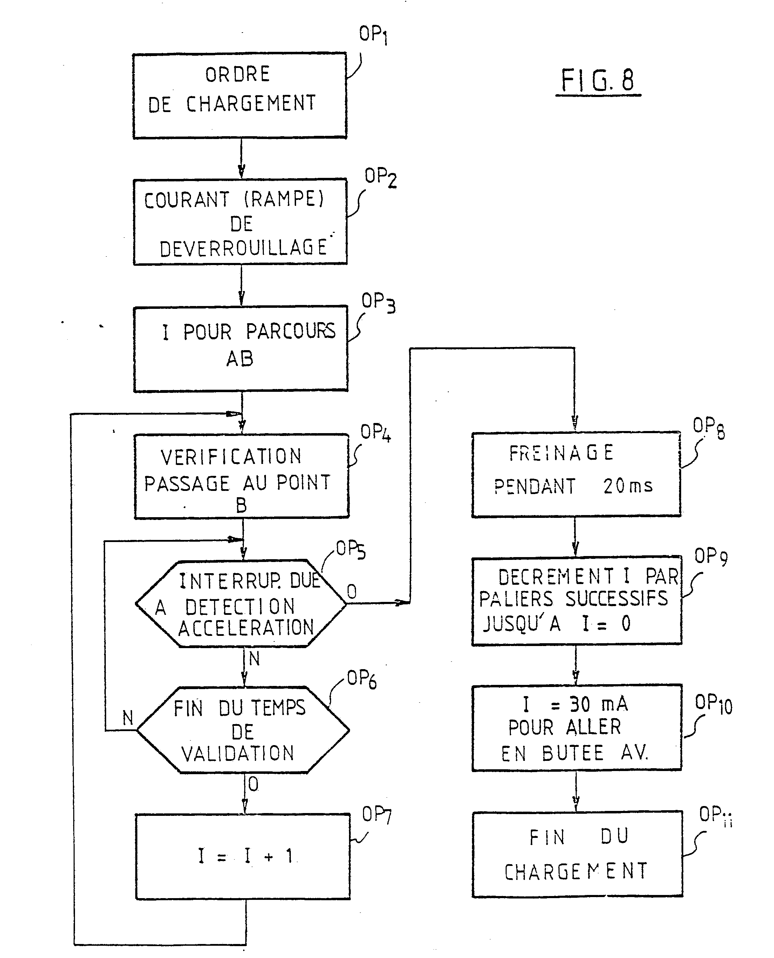

Le générateur d'instructions GI, dans un mode de réalisation préféré de l'invention est un

8

microprocesseur contenant un microprogramme délivrant une suite d'instructions binaires au convertisseur digital analogique CDA, suivant un algorithme qui est représenté à la figure 8. A chaque valeur binaire envoyée par le générateur d'instructions GI au convertisseur digital analogique CDA correspond, à la sortie de ce dernier, une impulsion de tension, transformée en impulsion de courant par le générateur GEN.

Les différentes opérations commandées par le générateur d'instructions, suivant l'algorithme de la figure 8 sont les suivantes. Elles sont dénommées $OP_1$ à $OP_{11}$.

Opération $OP_1$ : On donne l'ordre de chargement de la tête T.

Opération $OP_2$ : Une fois l'ordre de chargement donné, on envoie la rampe de courant de déverrouillage (voir figure 5A), et on vérifie si le système mobile n'est pas passé au point A, par l'intermédiaire des moyens de détection DETECT.

Opération $OP_3$ : Lorsque le système mobile est passé au point A, on envoie une première impulsion de courant $I_1$, (voir figure 5B) dans l'induit du moteur ACRO.

Opération $OP_4$ : On vérifie pendant un temps égal au maximum à la durée du temps de validation $t_V$, si le système mobile passe au point B.

Opération $OP_5$ : On se demande s'il faut interrompre l'alimentation de l'induit du moteur ACRO. Si on détecte le passage du système mobile au point B, la réponse est oui et on passe à l'opération $OP_8$, sinon on passe à l'opération $OP_6$.

Opération $OP_6$ : On vérifie si la durée de l'impulsion $I_1$ est égale au temps de validation $t_V$ (voir figure 5B). Si la réponse est non, on revient à l'opération $OP_5$, alors que si la réponse est oui on passe à l'opération $OP_7$.

Opération $OP_7$ : On alimente le moteur avec une impulsion de courant $I_2$ et on revient à l'opération $OP_4$.

Opération $OP_8$ : On envoie une impulsion de freinage (voir figure 5C) pendant une durée $t_4$ et on passe ensuite à l'opération $OP_9$ quand le temps $t_4$ s'est écoulé.

Opération $OP_9$ : On envoie un courant décroissant par paliers successifs, jusqu'à une valeur nulle et ce pendant un temps donné compris entre 200 et 300 millisecondes, jusqu'à ce qu'on ait atteint le palier de courant où celui-ci a une intensité nulle. On passe alors à l'opération $OP_{10}$.

Opération $OP_{10}$ : On envoie une impulsion de courant I, positive, par exemple égale à 30 milliampères dans l'induit du moteur jusqu'à ce que le système mobile parvienne à son point limite (encore appelé butée avant). Lorsque l'on est parvenu en ce point, on passe à l'opération $OP_{11}$.

Opération $OP_{11}$ : On donne l'ordre de fin de chargement.

Les moyens de détection DETECT du passage du système mobile soit au point A, soit au point B (on rappelle que le mode de détection en ces deux points est identique) comprennent :
des moyens de différenciation DIF,
un comparateur COMP.
Les moyens de différenciation DIF différencient la force contre électromotrice e prise aux bornes de l'induit du moteur ACRO. Cette valeur différenciée e' = de/dt est comparée avec une valeur de seuil SA dans un comparateur COMP. Ce comparateur envoie une valeur linéaire 0 au générateur d'instructions GI, tant que l'accélération reste inférieure au seuil SA, et envoie une valeur binaire égale à 1 lorsque l'accélération a dépassé ce seuil SA, c'est-à-dire lorsque le système mobile est passé soit au point A soit au point B.

## Revendications

1. Procédé pour déplacer un système mobile (SCT) mu par un moteur électrodynamique (ACRO) suivant une trajectoire donnée (AB') vers un point de destination donné de celle-ci (B'), en étant soumis à des efforts résistants constants pendant la durée d'un même déplacement mais pouvant varier sensiblement d'un parcours de la trajectoire (AB') à l'autre, le parcours comprenant une première partie (AB) et une seconde partie (BB'), la durée de la seconde partie étant très inférieure à la durée de la première, particulièrement moins de 5 % de la durée totale du parcours, le système mobile passant au point (B) intermédiaire, avec une vitesse comprise entre une valeur minimum ($V_1$) et une valeur maximum

($V_2$) et étant soumis en ce point à une force motrice provoquant une accélération subite de celui-ci, où on effectue les opérations suivantes :

a) On incrémente le courant d'un premier sens dans le moteur par pas successifs d'une durée de validation ($t_v$) déterminée par envoi dans ce dernier d'une succession d'impulsions de courant ($I_1$, $I_2$, $I_3$) en vérifiant pendant la durée de validation de chaque impulsion· si le mobile (SCT) passe au point intermédiaire (B) par détection d'une accélération du mobile surpassant un seuil déterminé, en envoyant à la fin de cette durée une nouvelle impulsion de courant supérieure à la précédente si le mobile n'est pas parvenu au point intermédiaire à cet instant, la valeur de la durée de validation ($t_v$) et de l'incrément de courant ($\Delta i$) étant respectivement fonction de la longueur du parcours et de la valeur minimum d'une part ($V_1$), de la valeur maximum ($V_2$) d'autre part,

b) On envoie une impulsion de courant ($I_F$) d'un sens inverse dans le moteur, lorsque le mobile est parvenu au point intermédiaire (B) permettant à celui-ci d'opposer un couple résistant à ladite force motrice, la valeur de l'impulsion de freinage étant calculée de manière à permettre l'immobilisation du système mobile.

2. Dispositif pour déplacer un système (SCT) de déplacement et de chargement d'au moins une tête comportant au moins un transducteur de lecture-écriture d'un disque magnétique (DISC), le long d'une came (CAM) à deux points de ruptures de pente (points A et B) suivant une trajectoire donnée (A'ABC), le système étant mu par un moteur électrodynamique partant d'un point A' où il est verrouillé, étant soumis à des efforts résistants constants pendant la durée du déplacement mais pouvant varier sensiblement d'un déplacement à l'autre et passant au second point (B) de rupture avec une vitesse comprise entre une valeur minimum ($V_1$) et une valeur maximum ($V_2$)... le dispositif comprenant, dans le but d'amener le système au point d'arrivée (C) où les têtes sont abaissées vers le disque en position de vol au-dessus de celui-ci, les moyens suivants :

a) Des moyens pour déverrouiller le système en envoyant un courant d'un premier sens et d'intensité croissante dans le moteur jusqu'à ce qu'on détecte son passage au premier point de rupture de pente de la came (point A),

b) Des moyens pour incrémenter la vitesse du système mobile par incrémentation du courant dans le moteur par pas successifs d'une durée de validation prédéterminée ($t_v$), par envoi dans ce dernier d'une suite d'impulsions de courant de même sens, en vérifiant pendant la durée de validation ($t_v$) de chaque impulsion si le système passe au second point de rupture de pente (B), en envoyant à la fin de cette durée une nouvelle impulsion de courant supérieure à celle de la précédente si le système n'est pas parvenu en ce point à cet instant, la valeur de la durée de validation ($t_v$) et de l'incrément de courant étant respectivement fonction de la longueur du parcours et de la vitesse minimum d'une part et de la valeur maximum d'autre part, au second point de rupture.

c) Des moyens pour donner au système, lorsque l'on a détecté son passage par mesure de l'accélération du système au second point de rupture de pente (point B) où il est alors soumis à une force motrice dont l'intensité décroît en fonction de la distance du système par rapport à ce second point de rupture de pente, une vitesse de référence déterminée par envoi d'un courant ($I_F$) de sens inverse dans le moteur permettant à celui-ci d'opposer un effort résistant à ladite force motrice, de manière à permettre l'immobilisation du système mobile.

d) Des moyens pour contrôler la vitesse du système mobile par envoi dans le moteur d'un courant décroissant.

3. Dispositif selon la revendication 2 comprenant des moyens de détection (DETECT) pour détecter le passage d'un point de rupture et constitué par des moyens de différentiation de la tension prise aux bornes de l'induit du moteur électrodynamique, et des moyens de comparaison de la dérivée de ladite tension avec une valeur prédéterminée de l'accélération.

4. Dispositif selon la revendication 3 comprenant des moyens de commande constitués par un microprocesseur commandant un convertisseur digital analogique dont la sortie est connectée aux moyens d'alimentation du moteur (GEN), le microprocesseur étant lui-même commandé par les moyens de détection (DETECT).

5. Dispositif selon la revendication 4 où les moyens d'alimentation du moteur (GEN) transforment les impulsions de tension qu'il reçoit en impulsions de courant.

## Claims

1. A method of displacing a mobile system (SCT) moved by an electrodynamic motor (ACRO) along a given trajectory (AB') to a given destination point (B') of the same, whilst being exposed to resistive forces constant during the period of an identical displacement but substantialy variable from one course of the trajectory (AB') to another, the course comprising a first part (AB) and a second part (BB'), the period of the second part being much shorter than the period of the first, in particular less than 5 % of the total period of the course, the mobile system passing an intermediate point (B), at a speed of between a minimum value ($V_1$) and a maximum value ($V_2$) and being exposed at this point to a motive force causing a sudden acceleration of the same, where the following operations are performed :

a) The current in a first direction in the motor is incremented by successive steps of a validation

period ($t_v$) determined by transmission in this latter of a succession of current pulses ($I_1$, $I_2$, $I_3$) whilst checking during the validation period of each pulse if the mobile system (SCT) passes the intermediate point (B) by detection of an acceleration of the mobile system surpassing a determined threshold, whilst transmitting at the end of this period another current pulse greater than the preceding one if the mobile system has not reached the intermediate point at this instant, the value of the validation period ($t_v$) and of the current increment ($\Delta i$) being respectively functions of the length of path and of the minimum value ($V_1$) on the one hand and of the maximum value ($V_2$) on the other hand,

b) a current pulse ($I_F$) having an opposite direction is transmitted to the motor when the mobile system has reached the intermediate point (B), enabling the latter to oppose a resistive couple to the said motive force, the value of the bracking pulse being calculated in such a manner as to allow the immobilisation of the mobile system.

2. A device for displacing a system (SCT) for displacement and loading of at least one head comprising at least one transducer for reading and writing on a magnetic disc (DISC), along a cam (CAM) having two slope interruption points (points A and B) following a given trajectory (A'ABC), the system being moved by an electrodynamic motor starting from a point A' where it is locked, being exposed to resistive forces constant during the displacement period but substantially variable between one displacement and another and passing the second interruption point (B) at a speed of between a minimum value ($V_1$) and a maximum value ($V_2$)... the device comprising, for the purpose of taking the system to the point of arrival (C) where the heads are lowered towards the disc into a floating position above the same, the following means :

a) Means for unlocking system by transmitting a current of a first direction and of increasing intensity into the motor until its passage is detected at the first point of interruption of the slope of the cam (point A).

b) Means for incrementing the speed of the mobile system by incrementation of the current in the motor in successive steps of a predetermined validation period ($t_v$), by transmission into this latter of a succession of current pulses of identical direction, whilst checking during the validation period ($t_v$) of each pulse if the system passes the second slope interruption point (B), by transmitting at the end of this period, another current pulse greater than the preceding one if the system has not reached this point at this instant, the value of the validation period ($t_v$) and of the current increment being functions respectively of the length of the path and of the minimum speed on the one hand and of the maximum value on the other hand, at the second interruption point.

c) Means for imparting to the system, upon having detected its passage by measuring the acceleration of the system at the second slope interruption point (point B) where it is then exposed to a motive force the intensity of which decreases as a function of the distance of the system with respect to this second slope interruption point, a reference speed determined by feeding a current ($I_F$) of opposite direction into the motor enabling the same to oppose a resistive force against the said motive force, in such manner as to allow the immobilisation of the mobile system.

d) Means for controlling the speed of the mobile system by feeding a decreasing current into the motor.

3. A device according to claim 2, comprising detection means (DETECT) for detecting the passage through an interruption point and formed by means of differentiating the voltage tapped off at the terminals of the armature of the electrodynamic motor, and means of comparing the drift of the said voltage with a predetermined value of the acceleration.

4. A device according to claim 3, comprising control means formed by a microprocessor controlling a digital/analog converter the output of which is connected to the means of supplying the motor (GEN), the microprocessor itself being controlled by the detection means (DETECT).

5. A device according to claim 4 in which the means of supplying the motor (GEN) transform the voltage pulses they receive into current pulses.

**Patentansprüche**

1. Verfahren zum Verschieben eines beweglichen Systems (SCT), das von einem elektrodynamischen Motor (ACRO) entlang einer bestimmten Bahn (AB') zu einem gegebenen Bestimmungspunkt (B') derselben angetrieben ist, wobei es während der Dauer einer selben Verschiebung konstanten Widerstandskräften ausgesetzt wird, welche aber von einer Bahnstrecke (AB') zur anderen wesentlich variieren können, wobei die Strecke einen ersten Teil (AB) sowie einen zweiten Teil (BB') umfaßt, die Dauer des zweiten Teils sehr viel kürzer als die Dauer des ersten Teils ist, insbesondere weniger als 5 % der Gesamtdauer der Strecke beträgt, wobei das bewegliche System mit einer zwischen einem Minimumwert ($V_1$) und einem Maximalwert ($V_2$) enthaltenen Geschwindigkeit den Zwischenpunkt (B) durchläuft und an diesem Punkt einer Antriebskraft ausgesetzt ist, welche eine plötzliche Beschleunigung des Systems verursacht, in welchem die folgenden Maßnahmen vorgenommen werden :

a) in dem Motor wird der Strom einer ersten Richtung in aufeinanderfolgenden Schritten einer bestimmten Freigabedauer ($t_v$) durch Anlegen einer Folge von Stromimpulsen ($I_1$, $I_2$, $I_3$) an den Motor inkrementiert, wobei während der Freigabedauer jedes Impuls geprüft wird, ob das bewegliche System (SCT) den Zwischenpunkt (B) durchläuft, durch Erfassung einer eine bestimmte Schwelle überschreitenden Beschleunigung des beweglichen Systems, indem nach Beendigung dieser Dauer ein neuer Stromimpuls geschickt wird, welcher größer als der vorausgehende ist, wenn das bewegliche System zu diesem Zeitpunkt den Zwischenpunkt nicht erreicht hat, wobei der Wert der Freigabedauer ($t_v$) von der Länge der Strecke und der Wert der Strominkrementierung ($\Delta i$) von dem Minimumwert ($V_1$) einerseits und von dem Maximumwert ($V_2$) andererseits abhängig ist ;

b) ein Stromimpuls ($I_F$) umgekehrter Richtung wird in den Motor geschickt, wenn das bewegliche System den Zwischenpunkt (B) erreicht hat, was diesem ermöglicht, ein der Antriebskraft standhaltendes Moment entgegenzusetzen, wobei der Wert des Bremsimpulses so berechnet wird, daß das Stillhalten des beweglichen Systems ermöglicht wird.

2. Vorrichtung zum Verschieben eines Systems (SCT) zur Verschiebung und zur Belastung wenigstens eines Kopfes, der wenigstens einen Wandler zum Lesen und Schreiben einer magnetischen Platte (DISC) umfaßt, entlang einer Steuerkurve (CAM) mit zwei Steigungs-Unstetigkeiten (Punkt A und Punkt B) entlang einer bestimmten Strecke (A'ABC), wobei das System durch einen elektrodynamischen Motor angetrieben wird, der von einem Punkt A', wo er verriegelt ist, ausgeht, und konstanten Widerstandskräften während der Verschiebungsdauer ausgesetzt wird, welche aber von einer Verschiebung zur anderen wesentlich variieren können, und den zweiten Unstetigkeits- Punkt (B) mit einer zwischen einem Minimumwert ($V_1$) und einem Maximalwert ($V_2$) enthaltenen Geschwindigkeit durchläuft, wobei die Vorrichtung die folgenden Mittel umfaßt, um das System zu dem Ankunftspunkt (C) zu bringen, wo die Köpfe zur Platte hin in Flugposition über dieser abgesenkt sind :

a) Mittel zur Entriegelung des Systems durch Anlegen eines Stromes einer ersten Richtung und zunehmender Intensität an den Motor, bis sein Durchlaufen an dem ersten Steigungs-Unstetigkeitspunkt der Kurve (Punkt A) erfaßt wird ;

b) Mittel zur Inkrementierung der Geschwindigkeit des beweglichen Systems durch Inkrementierung des Stromes in dem Motor in aufeinanderfolgenden Schritten einer vorbestimmten Freigabedauer ($t_v$), indem eine Folge von Stromimpulsen einer selben Richtung in diesen geschickt werden, wobei während der Freigabedauer ($t_v$) jedes Impuls geprüft wird, ob das System den zweiten Unstetigkeitspunkt (B) durchlaufen hat, indem am Ende dieser Dauer ein neuer Stromimpuls geschickt wird, der größer als derjenige der vorausgehenden ist, wenn das System zu diesem Zeitpunkt diesem Punkt nicht erreicht hat, wobei der Wert der Freigabedauer ($t_v$) und der Wert der Strominkrementierung jeweils von der Länge der Strecke bzw. von der Minimumgeschwindigkeit einerseits sowie von dem Maximalwert an dem zweiten Unstetigkeitspunkt andererseits abhängig sind ;

c) Mittel, um dem System eine vorbestimmte Referenzgeschwindigkeit zu verleihen, wenn sein Durchlaufen durch Messen der Systembeschleunigung an dem zweiten Steigungs-Unstetigkeitspunkt (Punkt B) erfaßt worden ist, in welchem es dann einer Antriebskraft ausgesetzt wird, deren Intensität in Abhängigkeit von der Entfernung des Systems in Bezug auf diesen zweiten Unstetigkeitspunkt abnimmt, durch Schicken eines Stromes ($I_F$) umgekehrter Richtung in den Motor, welcher es ermöglicht, daß dieser der Antriebskraft eine Widerstandskraft entgegensetzt, so daß das Stillhalten des beweglichen Systems ermöglicht wird ;

d) Mittel zur Kontrolle der Geschwindigkeit des beweglichen Systems durch Schicken eines abnehmenden Stromes in den Motor.

3. Vorrichtung nach Anspruch 2, die Erfassungsmittel (DETECT) zur Erfassung des Durchlaufens eines Unstetigkeitspunktes umfaßt, und die aus Mitteln zum Differenzieren der Spannung, welche an den Ankerklemmen des elektrodynamischen Motors abgenommen wird, sowie aus Mitteln zum Vergleichen der Ableitung dieser Spannung mit einem vorbestimmten Beschleunigungswert besteht.

4. Vorrichtung nach Anspruch 3, die Steuermittel umfaßt, welche aus einem einen Digital/Analog-Wandler steuernden Mikroprozessor bestehen, dessen Ausgang mit den Mitteln zur Versorgung (GEN) des Motors verbunden sind, wobei der Mikroprozessor wiederum durch die Erfassungsmittel (DETECT) gesteuert wird.

5. Vorrichtung nach Anspruch 4, in welcher die Mittel zur Versorgung (GEN) des Motors die von ihm empfangenen Spannungsimpulse in Stromimpulse unwandeln.

FIG. 1A

FIG.1B.

$\overleftarrow{F_T}$    LAM    T    $\underline{FIG.2A}$

DISC

H

$C_1$    $C_2$

$F_T$    LAM    T    $\underline{FIG.2B}$

DISC

h

$C_1$    $C_2$

$\underline{FIG.4}$

$S_1$

A'

A

P $\{$(SCT)

ARC

B    B'    C

$S_2$

| PHASE I | PHASE II | PHASE III |
|---|---|---|
| Verrouillage /<br>déverrouillage | Approche des têtes en<br>position de chargement | Chargement/<br>déchargement |

## FIG. 3

FIG. 5A

PHASE I

FIG. 5B

PHASE II

FIG. 5C

PHASE III

FIG.6

# FIG. 7

FIG. 8

OP₁ — ORDRE DE CHARGEMENT

OP₂ — COURANT (RAMPE) DE DEVERROUILLAGE

OP₃ — I POUR PARCOURS AB

OP₄ — VERIFICATION PASSAGE AU POINT B

OP₅ — INTERRUP. DUE A DETECTION ACCELERATION

OP₆ — FIN DU TEMPS DE VALIDATION

OP₇ — I = I + 1

OP₈ — FREINAGE PENDANT 20ms

OP₉ — DECREMENT I PAR PALIERS SUCCESSIFS JUSQU'A I = 0

OP₁₀ — I = 30 mA POUR ALLER EN BUTEE AV.

OP₁₁ — FIN DU CHARGEMENT

7